# EUROPEAN PATENT APPLICATION

(11) **EP 4 495 420 A1**
(43) Date of publication of application: **22.01.2025**
(21) Application number: 23382764.1
(22) Date of filing: 21.07.2023
(51) Int. Cl.: F03D 13/20

(54) **UPPER FLANGE OF A STEEL SECTION OF A TOWER OF A WIND TURBINE**

(71) Applicant: Nordex Energy SE & Co. KG, 22419 Hamburg (DE)
(72) Inventor: Toenissen, Nils, Hamburg (DE)
(74) Representative: Pons

(57) **Abstract**

The object of the invention is an upper flange of a steel section of a tower of a wind turbine that avoids having to modify the yaw bearing, neither affecting other wind turbine components, since the lower geometry of the upper flange with regard to the steel section is maintained in its inner part, and also relates to a tower of a wind turbine and to a method of assembling a tower of a wind turbine.

## Description

### OBJECT OF THE INVENTION

The object of the invention is an upper flange of a steel section of a tower of a wind turbine that avoids having to modify the yaw bearing, neither affecting other wind turbine components, since the lower geometry of the upper flange with regard to the steel section is maintained in its inner part.

The invention also relates to a tower of a wind turbine and to a method of assembling a tower of a wind turbine.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

The design of wind turbine components and the design of the connections between them once placed, should take into account the loads they will have to bear throughout their useful life to ensure the proper functioning thereof. In particular, the connections between different concrete sections of the tower or between an upper concrete section and an adapter disposed above the upper concrete section for the transition between the concrete sections and the steel sections in the case of hybrid towers or for the transition between the concrete sections and the nacelle of the wind turbine in the case of full concrete towers, are adapted to withstand the loads they will have to bear throughout their useful life, such as gravitational loads, assembly loads, inertial loads, aerodynamic loads, operational loads and other loads that depend on the location where the wind turbine is to be installed, such as earthquakes.

Both in full steel towers or steel-concrete towers (hybrid towers) the upper steel section is joined to an upper flange configured to be joined to the yaw bearing disposed above the upper flange.

The upper flange is annular having a square or rectangular section determined by the calculation of the bolts that are used to join the upper flange to the yaw bearing through a set of through-holes disposed in the upper flange.

The stresses concentration in that area is even higher than for other types of tower flanges due to the presence of the yaw bearing, the type of load to be supported and how it is transmitted.

The joint between the upper flange and the steel section when is made by welding has a low strength, thus making necessary to include upper steel sections with greater thickness.

Also, the joint between the upper flange and the steel section has an inner corner with an abrupt change of geometry, resulting in a high concentration of stresses, even causing fatigue damage and collapse of the wind turbine, since this configuration also affects the welding itself.

The present invention solves the problems described above.

### DESCRIPTION OF THE INVENTION

The invention relates to an upper flange of a steel section of a tower of a wind turbine comprising a yaw bearing, the steel section comprising an external diameter, wherein, in use, the upper flange is disposed above the steel section and wherein the upper flange comprises:
- an annular main body comprising a first set of holes configured to allocate bolts configured to join the upper flange to the yaw bearing, a height and an external diameter equal to the external diameter of the steel section;
- a first annular projection extending downwards from the annular main body, wherein the first annular projection comprises a lower end configured to be joined to the steel section and an external diameter equal to the external diameter of the steel section; and

wherein the upper flange further comprises a first additional annular part comprising an interior transition curve between the annular main body and the first annular projection; and
wherein the upper flange further comprises an annular secondary body that protrudes outwards from the external diameter of the annular main body in a radial direction.

In this way, an increase of the upper flange thickness is achieved outwards and downwards from the annular main body.

The downwards increase in thickness by means of the first annular projection increases the strength of the upper flange once it is joined to the steel section and the strength of the welding in case the upper flange is welded to the steel section, without having to go to greater thickness of the steel section.

This also avoids having to modify the yaw bearing, neither affecting other wind turbine components, since the lower geometry of the upper flange with regard to the steel section is maintained in its inner part.

The outwards increase in thickness increase by means of the annular secondary body makes possible that the upper flange can withstand the fatigue and extreme loads.

Also, the interior transition curve between the annular main body and the first annular projection reduces the stress concentration in that zone, establishing a smooth transition between the main annular body and the first annular projection.

Optionally, the steel section is an upper steel section of the tower.

Optionally, the interior transition curve is a part of an ellipse, preferably one quarter of an ellipse. Preferably, the ellipse comprises a major semi-axis and a minor semi-axis, wherein the major semi-axis is disposed in a vertical disposition and the minor semi-axis is disposed in a horizontal disposition. This disposition allows to dispose the set of holes as close as possible to the steel section, for the disposition of bolts configured to join the upper flange to the yaw bearing. It is important that neither a washer that could be used together with the bolts and a bolt-tightening tool treads on the interior transition curve. Therefore, the distance from the set of holes to the interior transition curve is defined as the minimum to fit the washer and the tool.

Optionally, the annular secondary body comprises a height equal to the height of the annular main body, thus avoiding the stress concentration in the upper part of the main annular body.

Optionally, the first annular projection comprises a height, wherein a ratio of the height of the annular main body to the height of the first annular projection is between 1,3 and 2, preferably between 1,5 and 1,8.

Optionally, the upper flange further comprises a second annular projection that protrudes outwards from the external diameter of the first annular projection in the radial direction.

So, the upper flange is reinforced downwards from the annular main body supporting even greater loads and therefore stresses associated to fatigue and extreme loads.

Optionally, the second annular projection protrudes outwards in the radial direction the same distance as the annular secondary body.

Optionally, the upper flange further comprises a second additional annular part which in turn comprises an exterior transition curve between the second annular projection and the first annular projection.

Optionally, the second annular projection comprises a lower end and the first annular projection comprises an outer surface, wherein the second additional annular part comprising the exterior transition curve is disposed between the lower end of the second annular projection and the outer surface of the first annular projection.

This allows to increase the thickness of the second annular projection only the necessary height, joining the first annular projection and the second annular projection by means of the second additional annular part comprising the exterior transition curve, maintaining the same thickness in the zone wherein the upper flange and the steel section are joined, also avoiding to increase the thickness and therefore the weight and cost of the tower.

Optionally, the exterior transition curve of the second additional annular part is disposed, at least partially, below the interior transition curve of the first additional annular part.

Optionally, the second annular projection comprises a height, wherein a ratio of the height of the second annular projection to the height of the first annular projection is between 0,3 and 0,6.

Optionally, the second annular projection comprises a height, wherein a ratio of the height of the second annular projection to the sum of the height of the main annular body plus the height of the second annular projection is between 0,1 and 0,3.

Optionally, the second annular projection comprises a thickness and the first annular projection comprises a thickness, wherein a ratio of the thickness of the second annular projection to the thickness of the first annular projection is between 0,2 and 0,6.

Optionally, the annular secondary body comprises a thickness, wherein a ratio of the thickness of the annular secondary body to the external diameter of the annular main body is between 0,001 and 0,004.

Optionally, the first annular projection comprises a thickness and the steel section comprises a thickness, wherein the thickness of the first annular projection is equal to the thickness of the steel section.

Optionally, the annular main body comprises an internal diameter and the first annular projection comprises an internal diameter, wherein the internal diameter of the annular main body is lower than the internal diameter of the first annular projection.

Optionally, the annular main body comprises a lower surface and the first annular projection comprises an inner surface, wherein the first additional annular part comprising the interior transition curve is located between the lower surface of the annular main body and the inner surface of the first annular projection.

Optionally, the annular main body comprises a lower surface, wherein the exterior transition curve of the second additional annular part is disposed, at least partially, below the lower surface of the annular main body.

The invention also relates to a tower of a wind turbine comprising at least a yaw bearing, a steel section comprising an external diameter and the upper flange described above disposed above the steel section. The steel section may be part of a full steel tower, or part of a steel-concrete tower (hybrid tower).

The invention also relates to a method of assembling the tower described above comprising a step of joining the upper flange to the steel section.

Optionally, the step of joining the upper flange to the steel section is carried out by welding.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

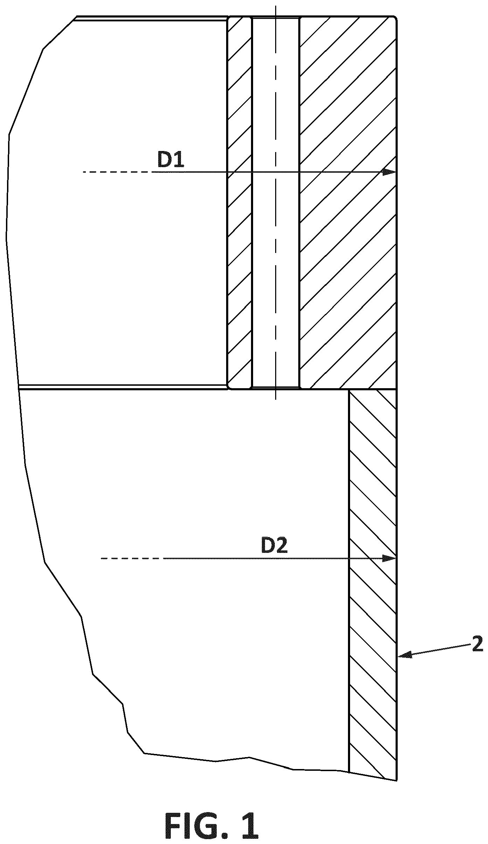

Figure 1 shows an upper flange joined to the steel section according to the state-of the-art.

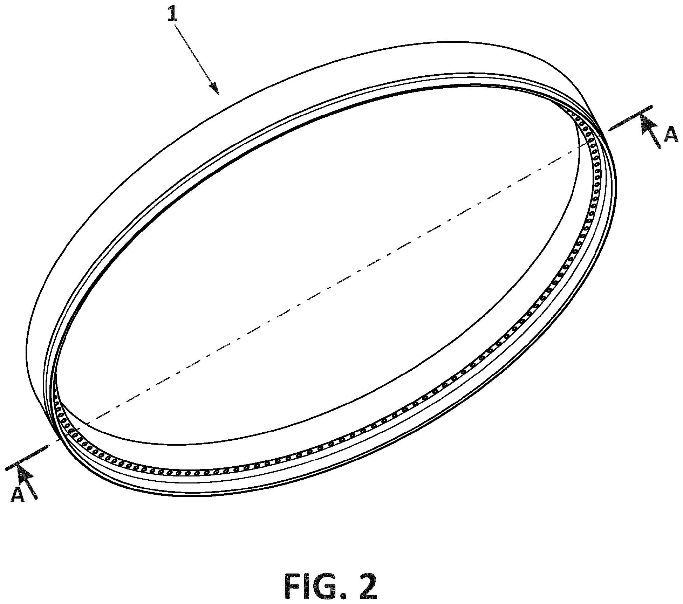

Figure 2 shown a perspective view of the upper flange according to the present invention.

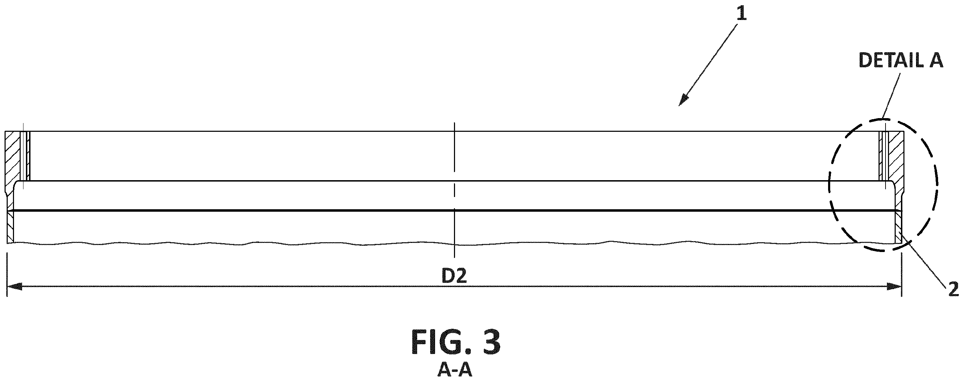

Figure 3 shows a section view AA of Figure 2, also including the steel section disposed below the upper flange.

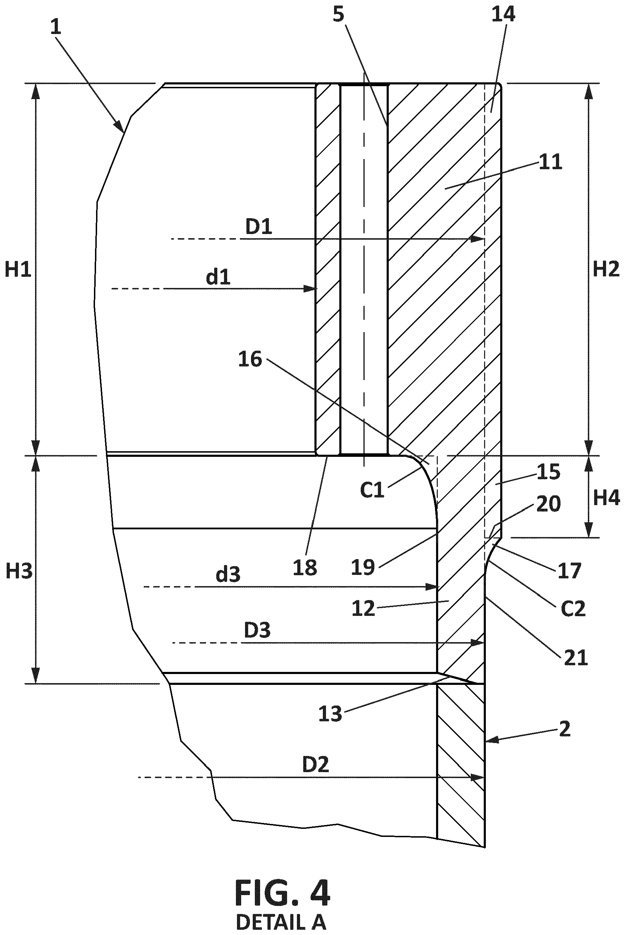

Figure 4 shows a detail A of Figure 3.

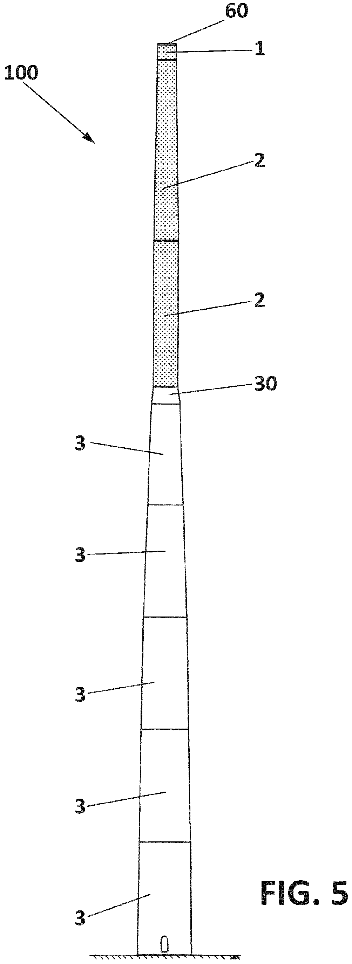

Figure 5 shows a tower comprising the upper flange for an embodiment wherein the tower is a steel-concrete tower.

### PREFERRED EMBODIMENT OF THE INVENTION

The following is a detailed description of the upper flange (1) of the present invention. The upper flange (1) is configured to be joined to a steel section (2), thus forming part of said steel section (2) of a tower (100) of a wind turbine comprising a yaw bearing (60).

The steel section (2) comprises an external diameter (D2), wherein, in use, the upper flange (1) is disposed above the steel section (2) and wherein the upper flange (1) comprises:
- an annular main body (11) comprising a first set of holes (5) configured to allocate bolts configured to join the upper flange (1) to the yaw bearing (60), a height (H1) and an external diameter (D1) equal to the external diameter (D2) of the steel section (2);
- a first annular projection (12) extending downwards from the annular main body (11), wherein the first annular projection (12) comprises a lower end (13) configured to be joined to the steel section (2) and an external diameter (D3) equal to the external diameter (D2) of the steel section (2);
- a second annular projection (15) that protrudes outwards from the external diameter (D3) of the first annular projection (12) in the radial direction; and

wherein the upper flange (1) further comprises a first additional annular part (16) comprising an interior transition curve (C1) between the annular main body (11) and the first annular projection (12); and
wherein the upper flange (1) further comprises an annular secondary body (14) that protrudes outwards from the external diameter (D1) of the annular main body (11) in a radial direction.

Preferably, the interior transition curve (C1) is a part of an ellipse, preferably one quarter of an ellipse.

Preferably, the annular secondary body (14) comprises a height (H2) equal to the height (H1) of the annular main body (11).

Preferably, the first annular projection (12) comprises a height (H3), wherein a ratio of the height (H1) of the annular main body (11) to the height (H3) of the first annular projection (12) is between 1,5 and 1,8.

Preferably, the second annular projection (15) protrudes outwards in the radial direction the same distance as the annular secondary body (14).

Preferably, the upper flange (1) further comprises a second additional annular part (17) which in turn comprises an exterior transition curve (C2) between the second annular projection (15) and the first annular projection (12).

Preferably, the second annular projection (15) comprises a lower end (20) and the first annular projection (12) comprises an outer surface (21), wherein the second additional annular part (17) comprising the exterior transition curve (C2) is disposed between the lower end (20) of the second annular projection (15) and the outer surface (21) of the first annular projection (12).

Preferably, the exterior transition curve (C2) of the second additional annular part (17) is disposed, at least partially, below the interior transition curve (C1) of the first additional annular part (16).

Preferably, the second annular projection (15) comprises a height (H4), wherein a ratio of the height (H4) of the second annular projection (15) to the height (H3) of the first annular projection (12) is between 0,3 and 0,6.

Preferably, the second annular projection (15) comprises a height (H4), wherein a ratio of the height (H4) of the second annular projection (15) to the sum of the height (H1) of the main annular body (11) plus the height (H4) of the second annular projection (15) is between 0,1 and 0,3.

Preferably, the second annular projection (15) comprises a thickness and the first annular projection (12) comprises a thickness, wherein a ratio of the thickness of the second annular projection (15) to the thickness of the first annular projection (12) is between 0,2 and 0,6.

Preferably, the annular secondary body (14) comprises a thickness, wherein a ratio of the thickness of the annular secondary body (14) to the external diameter (D1) of the annular main body (11) is between 0,001 and 0,004.

Preferably, the first annular projection (12) comprises a thickness and the steel section (2) comprises a thickness, wherein the thickness of the first annular projection (12) is equal to the thickness of the steel section (2).

Preferably, the annular main body (11) comprises an internal diameter (d1) and the first annular projection (12) comprises an internal diameter (d3), wherein the internal diameter (d1) of the annular main body (11) is lower than the internal diameter (d3) of the first annular projection (12).

Preferably, the annular main body (11) comprises a lower surface (18) and the first annular projection (12) comprises an inner surface (19), wherein the first additional annular part (16) comprising the interior transition curve (C1) is located between the lower surface (18) of the annular main body (11) and the inner surface (19) of the first annular projection (12).

Preferably, the annular main body (11) comprises a lower surface (18), wherein the exterior transition curve (C2) of the second additional annular part (17) is disposed, at least partially, below the lower surface (18) of the annular main body (11).

The tower (100) comprises at least a yaw bearing (60), a steel section (2) comprising an external diameter (D2) and the upper flange (1) described above disposed above the steel section (2), preferably joined to the steel section (2) by welding.

## Claims

1. Upper flange (1) of a steel section (2) of a tower (100) of a wind turbine comprising a yaw bearing (60), the steel section (2) comprising an external diameter (D2), wherein, in use, the upper flange (1) is disposed above the steel section (2) and wherein the upper flange (1) comprises:
- an annular main body (11) comprising a first set of holes (5) configured to allocate bolts configured to join the upper flange (1) to the yaw bearing (60), a height (H1) and an external diameter (D1) equal to the external diameter (D2) of the steel section (2);
- a first annular projection (12) extending downwards from the annular main body (11), wherein the first annular projection (12) comprises a lower end (13) configured to be joined to the steel section (2) and an external diameter (D3) equal to the external diameter (D2) of the steel section (2); and
wherein the upper flange (1) further comprises a first additional annular part (16) comprising an interior transition curve (C1) between the annular main body (11) and the first annular projection (12); and
wherein the upper flange (1) further comprises an annular secondary body (14) that protrudes outwards from the external diameter (D1) of the annular main body (11) in a radial direction.

2. The upper flange of claim 1, wherein the interior transition curve (C1) is a part of an ellipse, preferably one quarter of an ellipse.

3. The upper flange of any of preceding claims, wherein the annular secondary body (14) comprises a height (H2) equal to the height (H1) of the annular main body (11).

4. The upper flange of any of preceding claims, wherein the first annular projection (12) comprises a height (H3), wherein a ratio of the height (H1) of the annular main body (11) to the height (H3) of the first annular projection (12) is between 1,3 and 2.

5. The upper flange of claim 4, wherein the ratio of the height (H1) of the annular main body (11) to the height (H3) of the first annular projection (12) is between 1,5 and 1,8.

6. The upper flange of any of preceding claims, further comprising a second annular projection (15) that protrudes outwards from the external diameter (D3) of the first annular projection (12) in the radial direction.

7. The upper flange of claim 6, wherein the second annular projection (15) protrudes outwards in the radial direction the same distance as the annular secondary body (14).

8. The upper flange of any of claims 6 or 7, further comprising a second additional annular part (17) which in turn comprises an exterior transition curve (C2) between the second annular projection (15) and the first annular projection (12).

9. The upper flange of claim 8, wherein the second annular projection (15) comprises a lower end (20) and the first annular projection (12) comprises an outer surface (21), wherein the second additional annular part (17) comprising the exterior transition curve (C2) is disposed between the lower end (20) of the second annular projection (15) and the outer surface (21) of the first annular projection (12).

10. The upper flange of any of claims 8 or 9, wherein the exterior transition curve (C2) of the second additional annular part (17) is disposed, at least partially, below the interior transition curve (C1) of the first additional annular part (16).

11. The upper flange of any of claims 4 or 5 and of any of claims 6 to 10, wherein the second annular projection (15) comprises a height (H4), wherein a ratio of the height (H4) of the second annular projection (15) to the height (H3) of the first annular projection (12) is between 0,3 and 0,6.

12. The upper flange of any of claims 4 or 5 and of any of claims 6 to 10, wherein the second annular projection (15) comprises a height (H4), wherein a ratio of the height (H4) of the second annular projection (15) to the sum of the height (H1) of the main annular body (11) plus the height (H4) of the second annular projection (15) is between 0,1 and 0,3.

13. The upper flange of any of claims 6 to 12, wherein the second annular projection (15) comprises a thickness and the first annular projection (12) comprises a thickness, wherein a ratio of the thickness of the second annular projection (15) to the thickness of the first annular projection (12) is between 0,2 and 0,6.

14. The upper flange of any of preceding claims, wherein the annular secondary body (14) comprises a thickness, wherein a ratio of the thickness of the annular secondary body (14) to the external diameter (D1) of the annular main body (11) is between 0,001 and 0,004.

15. The upper flange of any of preceding claims, wherein the first annular projection (12) comprises a thickness and the steel section (2) comprises a thickness, wherein the thickness of the first annular projection (12) is equal to the thickness of the steel section (2).

16. The upper flange of any of preceding claims, wherein the annular main body (11) comprises an internal diameter (d1) and the first annular projection (12) comprises an internal diameter (d3), wherein the internal diameter (d1) of the annular main body (11) is lower than the internal diameter (d3) of the first annular projection (12).

17. The upper flange of any of preceding claims, wherein the annular main body (11) comprises a lower surface (18) and the first annular projection (12) comprises an inner surface (19), wherein the first additional annular part (16) comprising the interior transition curve (C1) is located between the lower surface (18) of the annular main body (11) and the inner surface (19) of the first annular projection (12).

18. The upper flange of any of claims 8 to 10, wherein the annular main body (11) comprises a lower surface (18), wherein the exterior transition curve (C2) of the second additional annular part (17) is disposed, at least partially, below the lower surface (18) of the annular main body (11).

19. Tower (100) of a wind turbine comprising at least a yaw bearing (60), a steel section (2) comprising an external diameter (D2) and the upper flange (1) of any of preceding claims disposed above the steel section (2).

20. Method of assembling the tower of claim 19 comprising a step of joining the upper flange (1) to the steel section (2).
